# FASCICULE DE BREVET EUROPEEN

(11) **EP 0 652 185 B1**
(45) Date de publication et mention de la délivrance du brevet: **29.03.2000**
(21) Numéro de dépôt: 94402472.8
(22) Date de dépôt: 03.11.1994
(51) Int. Cl.: C03B 23/035, C03B 23/025

(54) **Procédé et dispositif de bombage de feuilles de verre**
Verfahren und Vorrichtung zum Biegen von Glasscheiben
Method and apparatus for bending glass sheets

(30) Priorité: 04.11.1993 DE 4337559
(43) Date de publication de la demande: 10.05.1995
(73) Titulaire: SAINT-GOBAIN VITRAGE, 92400 Courbevoie (FR)
(72) Inventeur: Kuster, Hans-Werner, Dr., D-52066 Aachen (DE); Ollfisch, Karl-Josef, D-52080 Aachen (DE); Hariskos, Georgios, D-52249 Eschweiler (DE); Radermacher, Herbert, B-4730 Raeren (BE); Muller, Marco, D-52078 Aachen (DE)
(74) Mandataire: Muller, René

(56) Documents cités:
- EP-A- 0 241 355
- EP-A- 0 351 739
- EP-A- 0 531 152
- EP-A- 0 531 153
- DE-C- 4 215 285
- FR-A- 2 085 464

## Description

La présente invention concerne un procédé de bombage de feuilles de verre, procédé selon lequel les feuilles de verre subissent, en position horizontale sur une forme annulaire concave de bombage, un prébombage sous l'effet de la pesanteur, puis un bombage complémentaire à l'aide d'une forme pleine convexe de bombage agissant par le haut sur les feuilles prébombées et sur toute leur surface. L'invention concerne, en outre, un dispositif pour la mise en oeuvre du procédé.

Un procédé de ce genre est connu, par exemple, par le document EP-A-351 739. Selon ce procédé, après le prébombage sur une forme inférieure de bombage, les feuilles de verre subissent un bombage complémentaire par pressage mécanique, entre une forme convexe supérieure et la forme inférieure de bombage servant de matrice inférieure de bombage.

Un autre procédé de ce genre est connu par le document EP-A2-531 152. Selon ce procédé, après le prébombage sur la forme de bombage, les feuilles de verre sont soulevées de celui-ci et amenées sur une matrice inférieure de bombage par pressage. Lors du bombage complémentaire, les feuilles de verre sont bombées, par pressage mécanique entre ladite matrice inférieure et une forme pleine convexe supérieure couvrant toute la surface des feuilles de verre, pour recevoir leur forme définitive.

Les procédés connus de ce genre ne sont pas exempts d'inconvénients. Par exemple, si l'on utilise une forme de bombage comme matrice inférieure de bombage, pour le bombage complémentaire, on ne peut pas empêcher que, dans la partie intérieure de la partie périphérique, les feuilles de verre conservent un bombage important qui s'est produit lors du prébombage sous l'effet de la pesanteur. Si, pour éviter cet inconvénient, on utilise comme forme inférieure de bombage par pressage. une forme de bombage s'appliquant sur toute la surface, il peut facilement se produire dans les feuilles de verre des distorsions optiques qui trouvent leur origine dans le fait que le premier contact provoque, dans la zone de plus forte flexion, des déformations sur de petites surfaces, déformations qui ne sont pas entièrement éliminées, même en cas de poursuite de l'opération de pressage. En outre, les procédés connus de ce type qui utilisent des presses mécaniques exigent en général des moyens considérables sur le plan de la construction.

Le document EP-A-0 241 355 décrit par ailleurs, une technique de bombage de feuilles de verre une à une. Celles-ci après avoir été portées à température de bombage dans un four de chauffage, sont soulevées contre une forme supérieure convexe par une dépression créée en périphérie. La forme supérieure présente une dimension inférieure à celle des feuilles de verre.

Le document FR-A-2 085 464 décrit une technique identique à celle du document EP-A-0 241 355, selon laquelle la face inférieure de la forme supérieure de bombage est placée totalement à l'intérieur d'un caisson de dépression.

La présente invention a pour but de fournir un procédé du type mentionné, selon lequel il soit possible de bomber au moins une feuille de verre, destiné notamment à la fabrication d'un vitrage feuilleté, en lui donnant une forme définitive désirée, et ce à un coût relativement faible. Selon ce procédé, la forme de la feuille de verre doit être très précise aussi bien dans la partie périphérique que dans la partie intérieure et, en conséquence, des propriétés optiques optimales, c'est-à-dire des distorsions optiques aussi faibles que possible doivent être obtenues sur toute la surface. Le procédé doit aussi permettre de corriger dans la phase suivante de bombage par pressage, les feuilles de verre qui, lors du prébombage sous l'effet de la pesanteur, ont subi un bombage trop fort, sans pour autant réduire la qualité optique.

Ce but est atteint, conformément à l'invention, du fait que, dans l'opération de prébombage sous l'effet de la pesanteur, la feuille de verre est prébombée sur une forme annulaire concave de bombage correspondant au contour de la forme définitive désirée des feuilles de verre, jusqu'à ce que leur bord s'applique entièrement sur cette forme annulaire concave, et du fait qu'elle est ensuite bombée, prenant alors la forme définitive qui est désirée, à l'aide d'une forme pleine convexe de bombage s'appliquant sur toute la surface, dans la partie intérieure clui se trouve à l'intérieur de la partie périphérique. Pour cela, les feuilles de verre sont pressées contre la forme pleine convexe de bombage s'appliquant sur toute leur surface, par aspiration au bord de cette forme pleine.

Ce procédé est plus particulièrement adapté au bombage simultané de deux feuilles de verre destinées à la réalisation d'un vitrage feuilleté tel qu'un pare-brise de véhicule automobile.

L'invention a donc pour objet de réaliser le procédé de prébombage de telle façon que, sous l'effet de la pesanteur, les feuilles de verre se déforment dans tous les cas dans une mesure telle qu'elles prennent leur forme définitive dans la partie périphérique. Suivant la forme définitive qui est désirée, la partie intérieure des feuilles de verre peut, sous l'effet de la pesanteur, fléchir plus ou moins au-delà de ce qui est souhaité. A la suite du prébombage sur la forme annulaire concave, les feuilles de verre sont appliquées, lors de la phase de bombage complémentaire, sur la forme pleine convexe supérieure de bombage, dont la forme correspond à la forme définitive désirée des feuilles de verre, par aspiration d'air le long du bord de la forme pleine convexe de bombage qui s'applique sur toute leur surface.

Si, à la fin de la phase de prébombage, le bombage, dans la partie intérieure des feuilles de verre, est plus fort que le bombage définitif qui est désiré, le bombage plus fort de la partie intérieure est supprimé par l'opération d'aspiration. Un bombage excessif de ce genre, qui se produit en particulier dans la zone de transition entre la partie intérieure proprement dite des feuilles de verre et leur partie périphérique, est donc corrigé par l'opération de bombage par pressage sous l'effet de l'aspiration.

Dans la phase de bombage complémentaire ayant notamment pour but de rectifier la forme, la partie périphérique des feuilles de verre, qui présente déjà la forme théorique, s'applique sur la forme pleine convexe de bombage qui couvre toute la surface. Cependant, comme la forme pleine convexe de bombage qui s'applique sur toute la surface est toujours recouverte d'un tissu ou d'une membrane réfractaire et perméable à l'air, le courant d'air aspiré qui passe à côté de la partie périphérique des feuilles de verre engendre une dépression entre la surface de la forme pleine de bombage et la feuille de verre supérieure. Notamment dans le cas de deux feuilles de verre bombées simultanément, cette dépression suffit pour presser la feuille de verre supérieure, sur toute sa surface, contre la forme de bombage et pour corriger de cette façon les parties trop bombées. En même temps, ce courant d'air aspiré qui agit le long de tout le périmètre des feuilles de verre empêche que, pendant cette phase de correction, de l'air ne pénètre entre les deux feuilles de verre, de sorte que la feuille de verre inférieure est elle aussi soumise à cette correction du bombage, ce qui n'est pas possible si la paire de feuilles de verre est aspirée par une dépression agissant sur la surface supérieure de la feuille de verre.

Le procédé de l'invention présente également un avantage si, à la fin de la phase de prébombage, la partie intérieure des feuilles de verre présente un bombage plus faible que le bombage définitif souhaité. Dans ce cas, la partie périphérique des feuilles de verre est pressée par aspiration contre la forme pleine convexe de bombage supérieure, donnant ainsi un bombage complémentaire aux feuilles de verre, dans leur partie intérieure. Si les feuilles de verre présentent, dans leur partie intérieure, un bombage plus faible que la forme pleine convexe supérieure de bombage correspondant à la forme définitive désirée des feuilles de verre, lors de son mouvement dirigé vers la forme pleine convexe supérieure de bombage, la feuille de verre touche cette forme supérieure de bombage d'abord dans sa partie intérieure, et la partie périphérique de la feuille de verre, qui présente déjà le bombage définitif, ne se trouve tout d'abord pas encore en contact avec ladite forme supérieure de bombage. Sous l'effet de l'aspiration à côté du bord de la forme pleine convexe supérieure de bombage destinée à s'appliquer sur toute la surface, la partie périphérique des feuilles de verre subit alors une force dirigée vers la forme pleine convexe supérieure de bombage et, sous l'effet de cette force, les zones des feuilles de verre qui présentent un bombage plus faible que celui qui est désiré subissent un bombage complémentaire qui leur donne leur forme définitive désirée.

Selon le procédé conforme à l'invention, il est donc possible à la fois de réduire, par bombage en sens inverse, le bombage de zones trop fortement bombées et de donner un bombage complémentaire aux parties des feuilles de verre qui sont trop faiblement bombées. Ces deux opérations de correction peuvent même avoir lieu simultanément sur les mêmes feuilles de verre. C'est par exemple le cas, si l'on doit produire des vitrages dont le rayon de courbure est variable selon les parties de la surface.

L'invention présente aussi un dispositif selon la revendication 3.

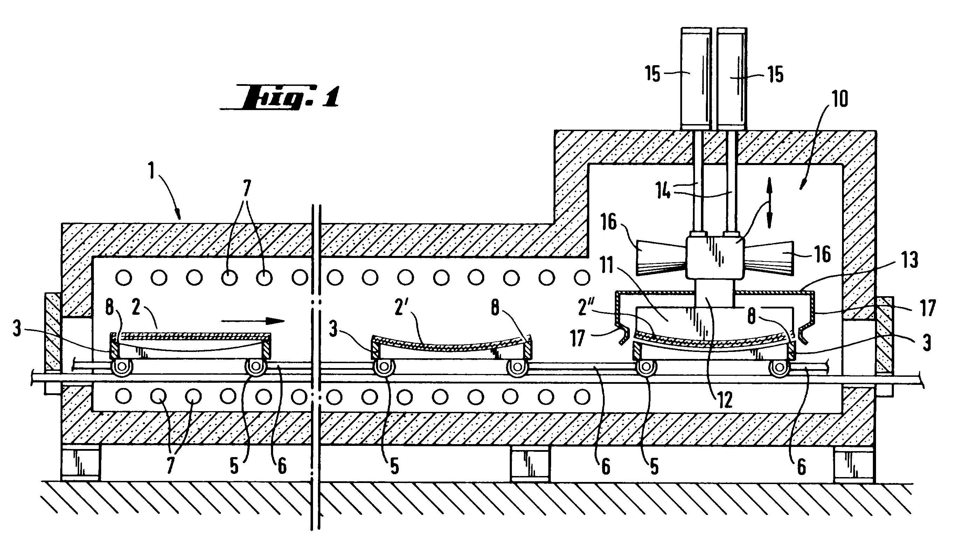

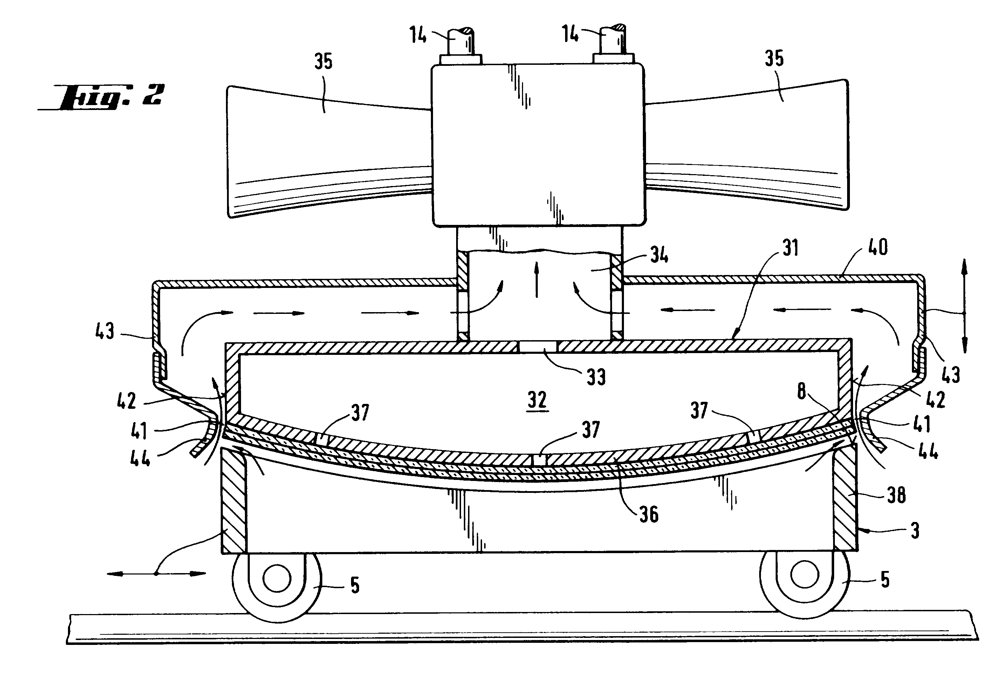

D'autres particularités et avantages de l'invention apparaîtront dans la description qui va suivre, faite en référence aux figures 1 et 2 qui représentent un exemple de réalisation préférentiel de l'invention correspondant au bombage simultané de deux feuilles de verre.
La figure 1 est une coupe longitudinale d'un four à bomber conforme à l'invention, et
La figure 2 est une représentation de détail, en coupe, d'un dispositif de bombage par aspiration utilisé conformément à l'invention.

La figure 1 représente l'ensemble d'une installation de bombage de feuilles de verre. Elle comprend un four continu horizontal 1 dans lequel les paires 2 de feuilles de verre sont déplacées sur des formes annulaires concaves de bombage 3 et chauffées pour atteindre la température de bombage.

Chaque paire 2 de feuilles de verre est posée sur une forme annulaire concave de bombage 3 dont la forme correspond exactement à la forme définitive désirée des feuilles de verre dans leur partie périphérique. Les formes de bombage 3 sont montées de façon à pouvoir être déplacées sur des roulettes 5 et reliées les unes aux autres par des éléments d'accouplement 6. Au-dessus et en dessous du plan de déplacement des formes annulaires de bombage sont disposés des éléments chauffants 7 servant à chauffer les plaques de verre 2 à la température de bombage. Vu dans le sens de déplacement des feuilles de verre, il y a, à l'extrémité arrière du four, un poste 10 de bombage par pressage, pourvu d'une forme pleine convexe supérieure de bombage 11 qui s'applique sur toute la surface. Par l'intermédiaire de supports 12, la forme pleine convexe de bombage 11 est fixée à une enveloppe 13 qui, au moyen de tiges 14 et d'un mécanisme de levage 15, peut être déplacée vers le haut et vers le bas. Des ventilateurs d'aspiration 16 sont placés au-dessus de l'enveloppe 13. Après l'opération de bombage complémentaire, les feuilles de verre 2 peuvent être transférées, à l'aide de la forme annulaire 3 de bombage, du four 1 dans un poste de refroidissement, non représenté, placé en aval du poste de bombage par pressage.

Avec ce dispositif de bombage, l'opération est effectuée de la manière suivante : dans un poste de transfert non représenté, les feuilles de verre planes 2 sont posées deux par deux sur les formes annulaires concaves de bombage 3. Sur ces formes de bombage 3, les paires de feuilles de verre 2 sont déplacées, à une cadence de travail déterminée, dans le four continu horizontal 1 tout en étant portées à la température de bombage. Sous l'effet de la pesanteur, les feuilles de verre 2 prennent alors une forme bombée. Le procédé est mis en oeuvre à des températures suffisamment élevées et pendant un temps suffisamment long, de sorte que, dans leur partie périphérique, les feuilles de verre 2 s'appliquent contre la surface annulaire 8 de bombage de la forme de bombage 3.

Le prébombage des feuilles de verre 2 et leur déplacement dans le four continu horizontal peuvent avoir lieu indépendamment l'un de l'autre. Cependant, il est particulièrement indiqué de faire en sorte que l'opération de prébombage et le déplacement des feuilles de verre aient lieu en même temps.

Les paires 2' de feuilles de verre prébombées sont ensuite amenées sous la forme pleine convexe de bombage supérieure 11 s'appliquant sur toute la surface. Quand une paire prébombée de feuilles de verre a atteint sa position en dessous de la forme pleine convexe de bombage 11, ladite forme supérieure de bombage 11 est abaissée, à l'aide du dispositif de levage 15, jusqu'à ce que la paire prébombée 2' de feuilles de verre puisse être amenée par aspiration contre la forme pleine convexe supérieure de bombage 11. Dans ce but, les ventilateurs d'aspiration 16 sont mis en marche. Les ventilateurs d'aspiration 16 produisent un écoulement d'air qui suffit à soulever la paire de feuilles de verre de la forme annulaire de bombage inférieur 3. Toutefois, il n'est pas indispensable de soulever complètement les feuilles de verre prébombées de la forme annulaire de bombage inférieur 3 ; il est aussi possible d'abaisser plutôt la forme pleine convexe supérieure de bombage 11 dans une mesure telle que les feuilles de verre restent encore en contact avec l'anneau de bombage 3.

Il est indiqué que l'enveloppe 13 soit pourvue, à son bord inférieur, d'une bride 17 faisant le tour et qui réduise l'interstice entre l'enveloppe 13 et la forme pleine convexe de bombage 11. Cela réduit aussi l'interstice entre les feuilles de verre 2' et l'enveloppe 13. Il est indiqué de réduire au minimum l'interstice car cela permet de diminuer le débit d'air nécessaire sans que la vitesse d'écoulement au bord des feuilles de verre et, ainsi, la dépression entre les feuilles de verre et la forme de bombage soient réduites. De cette manière, il est possible, pour obtenir la dépression désirée et, donc la force voulue pour corriger le bombage des feuilles de verre, d'utiliser des générateurs de dépression plus petits et moins onéreux.

Le cas échéant, on peut même supprimer complètement l'interstice et faire en sorte, par des mesures appropriées, que l'intervalle entre la forme annulaire de bombage 3 et l'enveloppe 13 soit fermé, par exemple, par des lèvres élastiques. De cette façon, la totalité de la dépression produite par les ventilateurs d'aspiration est efficace, entre la paire de feuilles de verre et la forme supérieure de bombage, le long du périmètre des feuilles. Cela permet de porter au maximum la dépression efficace qui agit sur les feuilles de verre.

Après le bombage par pressage au poste de bombage 10, les feuilles de verre 2'' ayant pris leur forme théorique par bombage sont de nouveau déposées sur les formes annulaires de bombage 3, à l'aide desquelles elles sont amenées dans un poste de refroidissement non représenté.

Le dessin détaillé de la figure 2 montre des détails de réalisation de la forme de bombage par aspiration. On voit que la forme pleine convexe supérieure de bombage 31 s'appliquant sur toute la surface est creuse. L'espace creux 32 est relié, par une ouverture 33, à la tubulure d'aspiration 34 sur laquelle les deux ventilateurs d'aspiration 35 sont fixés par brides. La plaque de formage proprement dite 36 est pourvue d'ouvertures 37, lesquelles servent en premier lieu à séparer la paire de feuilles de verre bombée de la surface de formage après l'opération de bombage complémentaire. Dans ce but, l'espace creux 32 de la forme de bombage est brièvement mis en surpression quand la paire de feuilles de verre doit être de nouveau déposée sur la forme annulaire de bombage 38.

La forme de bombage 31 est entourée d'une enveloppe 40 qui forme un espace creux fermé autour de la forme de bombage 31 et ne laisse qu'un interstice 41 tout autour, entre la surface périphérique 42 de la forme de bombage 31 et la paroi 43 de l'enveloppe 40. Cet interstice 41 qui fait tout le tour est formé par une jupe 44 qui se raccorde à la paroi 43 et qui, dans la position de fonctionnement du dispositif de bombage par aspiration, s'arrête à peu près à la hauteur de la surface de formage de la forme de bombage 38. Le contour intérieur de la jupe 44 est adapté à la géométrie du périmètre des feuilles de verre et, en fonction de cette géométrie, il peut être remplacée par d'autres jupes. Lors de la mise en marche des ventilateurs d'aspiration 35, on produit ainsi un déplacement d'air aspiré perpendiculaire à la surface de la paire de feuilles de verre à sa périphérie, dans le sens des flèches, qui produit l'effet décrit consistant à presser les deux feuilles de verre contre la surface de bombage de la plaque de formage 36.

## Revendications

1. Procédé de bombage d'au moins une feuille de verre, selon lequel la ou les feuilles de verre subissent, en position horizontale sur une lorme annulaire concave de bombage (3) correspondant au contour de la forme définitive désirée des feuilles de verre un prébombage sous l'effet de la pesanteur jusqu'à ce que leurs bords s'appliquent entièrement sur cette forme annulaire de bombage (3), et subissent ensuite un bombage complémentaire leur donnant la forme définitive désirée, dans la partie intérieure qui se trouve à l'intérieur de la partie périphérique à l'aide d'une forme pleine convexe de bombage (11, 31) agissant par le haut sur la ou les feuilles de verre prébombées et couvrant toute leur surface, la ou les feuilles de verre étant pressées contre la forme pleine convexe de bombage (11, 31), et ce par aspiration au bord de la forme pleine convexe de bombage (11,31).

2. Procédé selon la revendication 1, caractérisé en ce que les différentes étapes de bombage opèrent sur deux feuilles de verre simultanément.

3. Dispositif servant à appliquer le procédé de l'une des revendications 1 ou 2 comprenant un four de bombage (1) équipé de plusieurs formes annulaires concaves de bombage (3) clui peuvent être déplacées dans le four de bombage (1) selon une cadence déterminée, leur surface périphérique supérieure (8) correspondant à la forme définitive désirée des feuilles de verre dans leur partie périphérique et un poste de bombage par pressage (10) installé à l'extrémité du four de bombage (1) dans lequel, au-dessus du plan de déplacement de la forme de bombage (3), une forme pleine convexe supérieure de bombage (11, 31) est disposée de façon à pouvoir être soulevée et abaissée, un interstice d'aspiration (41) courant le long de la périphérie des feuilles de verre est formé à peu près à la hauteur de la surface de bombage (8) de la forme de bombage (3), entre la forme pleine convexe supérieure de bombage (11, 31) et une jupe (44) qui se raccorde à une paroi (43) d'une enveloppe (13, 40) entourant la forme de bombage (11, 31), et des ventilateurs d'aspiration (16, 35) sont placés au-dessus de l'enveloppe (13, 40).

## Patentansprüche

1. Verfahren zum Biegen mindestens einer Glasscheibe, bei dem die Glasscheibe oder Glasscheiben in horizontaler Lage auf einer konkaven, der endgültigen randseitigen Sollform der Glasscheiben entsprechenden Rahmenbiegeform (3) einem Biegevorgang durch Schwerkraftwirkung unterzogen werden, bis ihre Ränder sich vollständig an diese Rahmenbiegeform (3) anlegen, und anschließend mit Hilfe einer von oben auf die vorgebogene Glasscheibe oder Glasscheiben einwirkenden vollflächigen konvexen Biegeform (11, 31) einem ergänzenden Biegevorgang unterzogen werden, der ihnen ihre endgültige Form im innerhalb des Umfangsbereichs befindlichen inneren Bereich gibt, wobei die Glasscheibe oder Glasscheiben durch Absaugen über die Umfangskante der vollflächigen Biegeform an die vollflächige Biegeform angedrückt werden.

2. Verfahren nach Anspruch 1, **dadurch gekennzeichnet**, die unterschiedlichen Biegeschritte gleichzeitig mit zwei Glasscheiben ausgeführt werden.

3. Vorrichtung zum Anwenden des Verfahrens nach einem der Ansprüche 1 oder 2, mit einem Biegeofen (1) mit mehreren in einem vorbestimmten Takt in dem Ofen verfahrbaren konkaven Rahmenbiegeformen (3), wobei ihre obere Umfangsfläche (8) der endgültigen Sollform der Glasscheiben in deren Randbereich entspricht und mit einer am Ende des Ofens (1) angeordneten Preßbiegestation (10), in der oberhalb der Bewegungsebene der Biegeform (3) eine konvexe vollflächige obere Biegeform (11, 31) anhebbar und absenkbar angeordnet ist,
wobei etwa in Höhe der Biegefläche (8) der Biegeform (3) ein entlang dem Umfang der Glasscheiben verlaufender Absaugzwischenraum (41) zwischen der konvexen vollflächigen oberen Biegeform (11, 31) und einer Schürze (44) angeordnet ist, welche mit einer Wand (43) eines die Biegeform (11, 31) umgebenden Gehäuses (13, 40) verbunden ist, und Sauggebläse (16, 35) oberhalb des Gehäuses angeordnet sind.

## Claims

1. Process for bending at least one glass sheet, according to which the glass sheet or sheets undergo, in the horizontal position on an annular, concave bending mould (3) corresponding to the contour of the final desired shape of the glass sheets, a prebending under the effect of gravity until their edges are entirely applied to said annular bending mould (3), and then undergo a complimentary bending giving them the desired final shape, in the inner part located inside the peripheral portion with the aid of a solid, convex bending mould (11, 31) acting from the top on the prebent glass sheet or sheets and covering their entire surface, the glass sheet or sheets being pressed against the solid, convex bending mould (11, 31) by suction at the edge of said solid, convex bending mould (11, 31).

2. Process according to claim 1, characterized in that the different bending stages take place simultaneously on two glass sheets.

3. Apparatus for the application of the process according to one of the claims 1 or 2, comprising a bending furnace (1) equipped with several annular, concave bending moulds (3), which can be displaced in the bending furnace (1) in accordance with a predetermined rate, their upper peripheral surface (8) corresponding to the desired final shape of the glass sheets in their peripheral portion and a pressing bending station (10) installed at the end of the bending furnace (1) in which, above the displacement plane of the bending mould (3), a solid, upper, convex bending mould (11, 31) is positioned so as to be raisable and lowerable, a suction gap (41) passing along the periphery of the glass sheets being formed roughly level with the bending surface (8) of the bending mould (3), between the solid, upper, convex bending mould (11, 31) and a skirt (44), which is connected to a wall (43) of an envelope (13, 40) surrounding the bending mould (11, 31), and exhaust fans (16, 35) are placed above the envelope (13, 40).
